# EUROPEAN PATENT APPLICATION

(11) **EP 4 675 725 A1**
(43) Date of publication of application: **07.01.2026**
(21) Application number: 24763549.3
(22) Date of filing: 07.02.2024
(51) Int. Cl.: H01M 10/04, H01M 4/02, H01M 4/13, H01M 10/0587, H01M 50/538

(54) **SECONDARY BATTERY**

(30) Priority: 28.02.2023 JP 2023030509
(71) Applicant: Panasonic Energy Co., Ltd., Osaka 570-8511 (JP)
(72) Inventor: OGAWA, Kota, Moriguchi-shi, Osaka 570-8511 (JP)
(74) Representative: Eisenführ Speiser
(86) International application number: PCT/JP2024/004067
(87) International publication number: WO 2024/181065

(57) **Abstract**

This secondary battery includes an electrode body in which a positive electrode (11) and a negative electrode (12) are spirally wound with a separator (13) therebetween. The positive electrode (11) has positive electrode tabs (19) protruding in one direction from the electrode body (10). The negative electrode (12) includes a non-facing section (12a) which does not face the positive electrode (11) via the separator (13) on the winding inner side. The non-facing section (12a) has a negative electrode mixture layer (12-2) which has a different coating lengths in the longitudinal direction, and in which a minimum coating length section and a maximum coating length section are formed.

## Description

### TECHNICAL FIELD

The present disclosure relates to a secondary battery including a winding electrode assembly formed by winding a positive electrode and a negative electrode in a spiral shape with a separator interposed.

### BACKGROUND ART

As secondary batteries, cylindrical secondary batteries are widely used which include a winding electrode assembly formed by winding a positive electrode and a negative electrode in a spiral shape with a separator interposed.

For example, in Patent Literature 1, the winding electrode assembly is made into a conical shape by inclining the terminal end portions of the wound electrodes on the outer circumferential side. As a result, it is stated that insertion into an outer can is facilitated and gas exhaust performance is improved.

### CITATION LIST

### PATENT LITERATURE

PATENT LITERATURE 1: Japanese Unexamined Patent Application Publication No. 2004-296159

### SUMMARY

Incidentally, in such a secondary battery, a positive electrode in the electrode assembly and a positive electrode terminal for external connection are connected through a positive electrode tab, and a negative electrode in the electrode assembly and a negative electrode terminal for external connection are connected through a negative electrode tab. Here, the positive electrode includes a metal core material and a positive electrode mixture layer formed on the surface the metal core material, and the negative electrode includes a metal core material and a negative electrode mixture layer formed on the surface of the metal core material.

There is also known a structure in which a plurality of uncoated portions not coated with the positive electrode mixture layer are formed on one end side of the positive electrode, a core material corresponding to the uncoated portions is connected to the side of base portions of electrode tabs, while far end sides of the positive electrode tabs are connected to a positive electrode terminal through a positive electrode current collector plate.

When such a plurality of positive electrode tabs are formed, the positive electrode mixture layer does not exist on the portions where the positive electrode tabs are formed. Accordingly, when the positive electrode and the negative electrode are wound with a separator interposed, the density varies in a radial direction. In secondary batteries in particular, the electrode assembly expands and contracts as a result of charging and discharging, which makes the stress, generated in the area where the positive electrode tabs are formed, different from the stress generated in other areas. Consequently, there are possibilities that deviation in surface pressure inside the electrode assembly occurs during charging and discharging and causes a difference in displacement amount of electrode plates, which may lead to generation of a gap between the electrode plates or falling of positive electrode mixture. In addition, undesirable deformation may occur in the electrode plates in the electrode assembly, which may result in uneven charging and discharging. Therefore, there is a demand to suppress the deformation of electrode plates by equalizing the stress of the electrode assembly.

A secondary battery according to the present disclosure is a secondary battery including a winding electrode assembly formed by winding a positive electrode and a negative electrode in a spiral shape with a separator interposed, wherein the positive electrode has a positive electrode tab that protrudes in one direction from the electrode assembly, the negative electrode includes, on a winding inner side, a non-facing portion that does not face the positive electrode with the separator interposed, the non-facing portion has a negative electrode mixture layer in which a portion with a minimum coating length and a portion with a maximum coating length are formed, the minimum coating length and the maximum coating length being different in longitudinal coating length.

By varying the shape of the negative electrode mixture layer in the positive electrode non-facing portion of the negative electrode on the winding inner side of the electrode assembly, the stress applied to the electrode assembly is controlled, so that undesired deformation inside the winding electrode assembly can be suppressed.

### BRIEF DESCRIPTION OF DRAWING

FIG. 1 is a sectional view of a cylindrical battery as one example of an embodiment.
FIG. 2 is a view illustrating a winding state of an electrode assembly.
FIG. 3 is a schematic view showing the electrode assembly in an expanded state.
FIG. 4 is an enlarged view of main elements of the electrode assembly shown in FIG. 3.
FIG. 5 is a view showing the configuration of a secondary battery according to another embodiment.

### DESCRIPTION OF EMBODIMENTS

Hereinafter, examples of the embodiments of the secondary battery according to the present disclosure will be described in detail with reference to the drawings. Here, the configurations achieved by selectively combining a plurality of embodiments and modifications described below are incorporated in the present disclosure.

### [Overall Configuration]

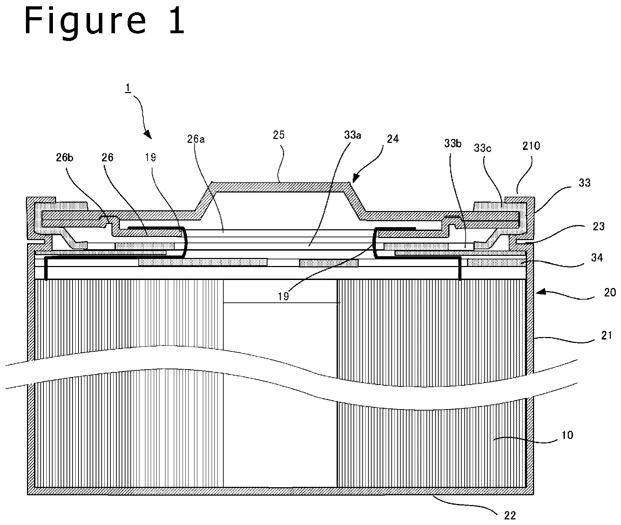

FIG. 1 is a sectional view of a battery 1 as one example of a secondary battery of an embodiment. As shown in FIG. 1, the battery 1 includes an electrode assembly 10 and an outer can 20 that houses the electrode assembly 10. The outer can 20 has a cylinder part 21, a bottom portion 22 that seals one end of the cylinder part 21, and an opening portion formed on the other end of the cylinder part, the opening portion being sealed with a sealing member 24. The outer can 20 also houses electrolyte solution together with the electrode assembly 10. The electrolyte solution may be aqueous electrolyte solution, though in the present embodiment, non-aqueous electrolyte solution is used.

The outer can 20 has an annular groove portion 23 formed on the cylinder part 21, and the sealing member 24 is supported by the groove portion 23 to seal the opening portion of the outer can 20. Hereinafter, for the convenience of description, the side of the sealing member 24 of the battery 1 is defined as an upper side, and the side of the bottom portion 22 of the outer can 20 is defined as a lower side.

The battery 1 further includes a plurality of electrode tabs that extend from each area of the electrode assembly 10 toward the side of the sealing member 24 to directly connect a first electrode constituting the electrode assembly 10 and a current collector plate 26 of the sealing member 24, and an upper insulating plate 34 arranged between the electrode assembly 10 and the sealing member 24. The electrode assembly 10 is a winding type electrode assembly having a first electrode and a second electrode wound with a separator interposed. In the present embodiment, the first electrode is a positive electrode and the second electrode is a negative electrode, and the electrode tabs are positive electrode tabs 19. As will be described later, the plurality of the positive electrode tabs 19 are arranged at predetermined intervals in the longitudinal direction of the positive electrode and extend upward from an upper portion (first end portion) of the positive electrode.

The positive electrode tabs 19 electrically connect the positive electrode and the sealing member 24. The negative electrode has a protruding portion electrically connected to the outer can 20 through a negative electrode collector plate. Accordingly, the sealing member 24 functions as a positive electrode terminal, and the outer can 20 functions as a negative electrode terminal. The upper insulating plate 34 prevents the positive electrode and the positive electrode tabs 19 from touching the outer can 20 and also prevents the positive electrode tabs 19 from touching the negative electrode of the electrode assembly 10.

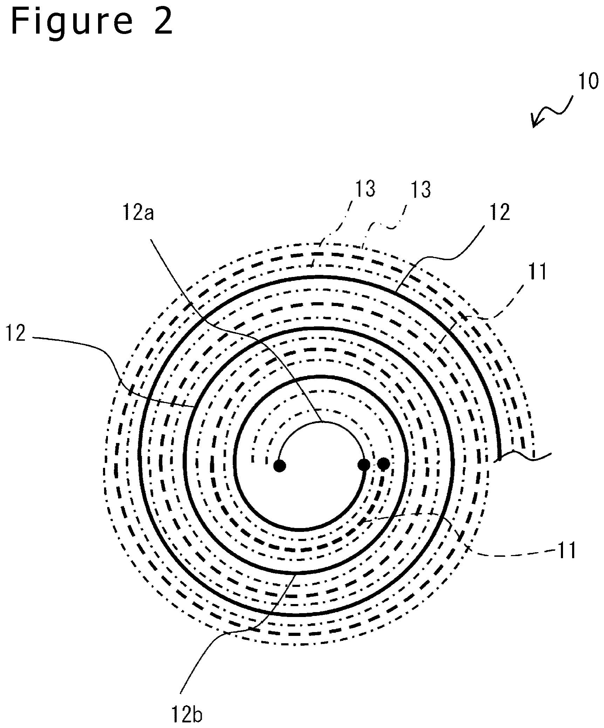

FIG. 2 is a view illustrating the winding state of the electrode assembly 10. The electrode assembly 10 includes a positive electrode 11, a negative electrode 12, and separators 13, which are all band-shaped long members and are stacked alternately in a radial direction of the electrode assembly 10 by being wound in a spiral shape. The negative electrode 12 has a mixture layer, and the mixture layer of the negative electrode 12 is formed with dimensions slightly larger than the mixture layer of the positive electrode 11 to prevent lithium deposition. Specifically, the mixture layer of the negative electrode 12 is formed to be longer in a longitudinal direction and a width direction (short direction) than the mixture layer of the positive electrode 11. In the example in FIG. 2, a start end on the inside of the positive electrode 11 is located outside a start end of the negative electrode 12. In a center portion of the electrode assembly 10, only the negative electrode 12 and the separators 13 are wound. The separators 13 are also formed with dimensions at least slightly larger than the positive electrode 11, and the two separators 13 are arranged to hold the positive electrode 11 therebetween. This allows the separators 13 to be interposed between the positive electrode 11 and the negative electrode 12 when they are wound.

The positive electrode 11 has a band-shaped positive electrode core material and a positive electrode mixture layer that is formed on at least one surface of the core material. As the positive electrode core material, there may be used a foil made of metal that is stable in a potential range of the positive electrode, such as aluminum and aluminum alloy, a film with the metal arranged on its surface layer, or the like. The positive electrode mixture layer preferably contains a positive electrode active material, a conductive agent such as acetylene black, and a binding agent such as polyfluoride vinylidene, and is formed on both the surfaces of the positive electrode core material. As the positive electrode active material, lithium-transition metal mixture oxide is used, for example. The positive electrode tabs 19, which are connected to the positive electrode, are preferably joined to the positive electrode core material directly by welding or the like.

The negative electrode 12 has a band-shaped negative electrode core material and a negative electrode mixture layer that is formed on at least one surface of the core material. As the negative electrode core material, there may be used a foil made of metal that is stable in a potential range of the negative electrode, such as copper and copper alloy, a film with the metal arranged on its surface layer, or the like. The negative electrode mixture layer preferably contains a negative electrode active material and a binding agent such as styrene-butadiene rubber (SBR), and is formed on both the surfaces of the negative electrode core material. As the negative electrode active material, graphite, silicon-containing compounds, and the like are used, for example. Here, a tongue-shaped negative electrode tab may be joined directly to the negative electrode core material by welding or the like and be joined to a current collector plate.

The non-aqueous electrolyte housed in the outer can 20 contains non-aqueous solvent and electrolyte salt dissolved in the non-aqueous solvent. As the non-aqueous solvent, there may be used, for example, esters, ethers, nitriles, amides, and mixed solvent of two or more of the group consisting of these. The non-aqueous solvents may contain halogen substitution products in which at least some of hydrogen in these solvents is substituted with halogen atoms such as fluorine. Examples of the non-aqueous solvents may include ethylene carbonate (EC), ethyl methyl carbonate (EMC), dimethyl carbonate (DMC), and mixed solvent of these. As the electrolyte salt, lithium salt such as LiPF₆ is used, for example.

The outer can 20, which is a bottomed cylindrical metal container with its one axial end (upper end) being opened, has the cylinder part 21 formed in a cylindrical shape and the bottom portion 22 having a circular shape as viewed from the bottom surface. While the outer can 20 is generally made of metal with iron as a main component, the outer can 20 may be made of metal with aluminum or the like as a main component when the outer can 20 is electrically connected to the cathode in particular. The outer can 20 also has the groove portion 23 formed along a circumferential direction of the cylinder part 21. The groove portion 23 is formed in the vicinity of the opening portion of the outer can 20 and at a position prescribed length distanced from an edge portion of the opening (the upper end of the outer can 20). The prescribed length is, for example, a length corresponding to greater than or equal to 1% and less than or equal to 20% of the axial length of the outer can 20.

In the present embodiment, a safety valve mechanism that operates at occurrence of abnormality in the battery 1 is provided at the bottom portion 22 of the outer can 20. On the other hand, the sealing member 24 is not provided with a safety valve mechanism. In the bottom portion 22, a thin-walled portion is formed, for example. When the internal pressure rises due to an abnormality in the battery 1, the thin-walled portion breaks preferentially, and a gas outlet is formed in the bottom portion 22.

The groove portion 23, which is a part of the cylinder part 21 that protrudes toward the inside of the outer can 20, is formed by spinning the cylinder part 21 from the outside, for example. Moreover, at a formation position of the groove portion 23, the diameter of the outer can 20 is reduced, and a thin line-shaped groove is formed on the outer circumferential surface of the cylinder part 21. The groove portion 23 preferably has a substantially U-shape in cross section and is annularly formed over the entire circumferential length of the cylinder part 21. The groove portion 23 is formed by processing the cylinder part 21 after the electrode assembly 10 is housed in the outer can 20.

The inner diameter of the outer can 20 at the formation position of the groove portion 23 is, for example, greater than or equal to 80% and less than or equal to 99% of a maximum inner diameter of the outer can 20. For example, the length of the groove portion 23 along the radial direction of the outer can 20 is 0.5 mm to 2.0 mm. Since the diameter of the electrode assembly 10 is about the same as the maximum inner diameter of the outer can 20, the electrode assembly 10 and the groove portion 23 overlap in an up-down direction of the battery 1. In the present embodiment, the lower ends of the positive electrode tabs 19 are connected to the upper end of the positive electrode at a plurality of points, and the other end is connected to a cap 25 through the current collector plate 26.

The sealing member 24 has the cap 25, the current collector plate 26, and a gasket 33, and is formed as a whole in a disk shape. The sealing member 24 is arranged on the groove portion 23 of the outer can 20 and is fixed to the opening portion of the outer can 20. The upper end of the opening portion is bent inward and is caulked to the sealing member 24 through the gasket 33. In other words, the sealing member 24 is fixed to the upper end portion of the outer can 20 by the groove portion 23 and the caulked portion of the outer can 20, and seals the opening portion of the outer can 20. The caulked portion is annularly formed along the circumference direction of the outer can 20, and holds the sealing member 24 together with the groove portion 23. Note that the sealing member 24 includes the upper insulating plate 34 or other parts to cover the upper opening of the outer can 20.

The cap 25 is a disk-shaped metal member that is exposed to the outside of the outer can 20 to form a top surface of the battery 1. The cap 25 has a shape (raised portion) of a radial center portion protruding to the outside of the battery 1. The cap 25 is connected to wiring materials when the battery 1 is modularized to form a battery pack. Accordingly, the cap 25 functions as an external terminal of the battery 1 and is also called an external terminal or a top cover. In the present embodiment, the current collector plate 26 is connected to the positive electrode tabs 19, and the cap 25 functions as a positive electrode external terminal.

The current collector plate 26, which is a metal member with a diameter similar to that of the cap 25, is located closer to the side of the electrode assembly 10 than to the cap 25. The current collector plate 26 with an opening portion 26a in the radially center portion is formed in an annular shape. The cap 25 and the current collector plate 26 are welded, and the current collector plate 26 is welded at a position closer to an outer circumferential edge than to a radial center of the cap 25, for example. The current collector plate 26 has an annular projection 26b formed as described later, the projection 26b being a portion welded to the cap 25. As mentioned above, the current collector plate 26 is connected to the positive electrode tabs 19 that are linked to the positive electrode of the electrode assembly 10. Therefore, the current collector plate 26 functions as a positive electrode current collector plate.

The gasket 33 is provided on an outer circumferential portion of a stacked body of the cap 25 and the current collector plate 26. The gasket 33 is an annular resin member or rubber member to prevent contact of the cap 25 and the current collector plate 26 with the outer can 20 and to ensure insulation between the outer can 20 and sealing member 24. The gasket 33 covers the upper surface of the cap 25, the side surfaces of the cap 25 and the current collector plate 26, and the lower surface of the current collector plate 26 in the outer circumferential portion of the stacked body. The gasket 33 also fills a gap between the outer can 20 and the sealing member 24 to seal the inside of the battery 1.

The gasket 33 is formed to cover most of the lower surface of the current collector plate 26 and is interspersed between the current collector plate 26 and the upper insulating plate 34. In a radially center portion of the gasket 33, an opening portion 33a is formed so as to overlap with the opening portion 26a of the current collector plate 26 in the up-down direction. The gasket 33 may also have a through-hole 33b formed in an area located below the current collector plate 26. While the electrolyte solution is assumed to accumulate on the upper surface of the gasket 33, providing the through-hole 33b allows the electrolyte solution to return to the side of the electrode assembly 10. There may be a plurality of through-holes 33b along the circumferential direction of the gasket 33, for example. The gasket 33 further has an inner extension portion 33c that extends inward from the outer circumferential portion of the cap 25.

The upper end of the outer can 20 may be bent inward to form a bent portion 210 and be used as a negative electrode external terminal.

### [Configuration of Electrode Assembly]

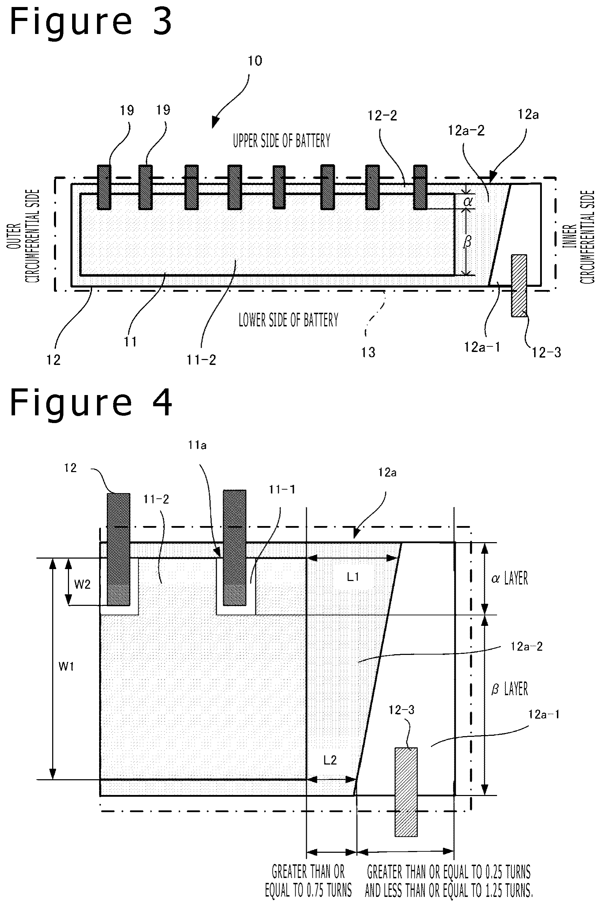

FIG. 3 is a schematic view showing the electrode assembly 10 in an expanded state. FIG. 4 is a partially enlarged view of FIG. 3.

The electrode assembly 10 includes the positive electrode 11, the negative electrode 12, and the separator 13, the separator 13 being located between the positive electrode 11 and the negative electrode 12. FIG. 3 shows how the positive electrode 11, the separator 13, and the negative electrode 12 are stacked as viewed from the side of the positive electrode 11, and only the outline of the separator 13 is shown by an alternate long and short dash line so that the negative electrode 12 is visible.

The positive electrode 11 is connected to the positive electrode tabs 19 on one end side (upper side) of the positive electrode 11. Here, the positive electrode 11 includes a positive electrode core material 11-1 and a positive electrode mixture layer 11-2 formed on the surface of the positive electrode core material 11-1. On the upper side of the positive electrode, positive electrode core material exposed portions 11a without the positive electrode mixture layer 11-2 are formed, and the base portions of the positive electrode tabs 19 are welded to the positive electrode core material exposed portions 11a. The positive electrode tabs 19 extending above the electrode assembly 10 are connected to the current collector plate 26 as shown in FIG. 1. Here, the positive electrode mixture layer 11-2 is formed on both the surfaces of the positive electrode core material 11-1, and the positive electrode core material exposed portions 11a are also formed on both the surfaces. The positive electrode tabs 19 are normally connected to one surface side.

The positive electrode mixture layer 11-2, which contains a positive electrode active material, a conductive agent such as acetylene black, and a binding agent made of polyfluoride vinylidene or the like as described above, is formed on both surfaces of the positive electrode core material 11-1 and has a predetermined thickness (for example, less than 1 mm). The positive electrode tabs 19 are made of metal foil, such as aluminum, which is thinner than the positive electrode mixture layer 11-2. In addition, although illustration is omitted, after the positive electrode tabs 19 are welded to the positive electrode core material 11-1, the base portions of the positive electrode tabs 19 are insulated by applying an insulating tape or the like. When the width of the positive electrode 11 is defined as 1, the positive electrode tabs 19 may be connected in a range within 0.3 from the upper end of the positive electrode 11. This allows the width of the α layer to be within a predetermined range.

Here, in the area on one end side of the positive electrode 11 (the α layer in FIG. 3), the positive electrode mixture layer 11-2 is formed on the positive electrode core material 11-1 by intermittent coating so as to form the positive electrode core material exposed portions 11a at prescribed intervals. Meanwhile, for a β layer of the positive electrode 11 that is other than the α layer, the positive electrode mixture layer 11-2 is formed by continuous coating.

In this way, in the positive electrode 11, the positive electrode core material exposed portions 11a are formed at one side edge portion (α layer) in the width direction, while in the area (β layer) other than the one side edge portion, there is no positive electrode core material exposed portion 11a.

Therefore, when the positive electrode 11, the negative electrode 12, and a separator are wound, the stress during expansion is relatively small in an upper portion of the electrode assembly 10 (a laminated portion of the α layer) where the positive electrode core material exposed portions 11a are present, while the stress increases in a center and lower portions (a laminated portion of the β layer) where the positive electrode core material exposed portions 11a are not present, so that uneven stress is generated.

Accordingly, when the stress is reduced by loose winding, the positive electrode 11 tends to float in the upper portion of the electrode assembly 10 (the laminated portion of the α layer), whereas when the stress is increased by tight winding, buckling may occur in the area other than the upper portion of the electrode assembly 10 (the laminated portion of the β layer).

In the present embodiment, the positive electrode 11 is first terminated at a winding inner end (an inner circumferential end portion), which corresponds to the center side when the electrode assembly 10 is wound, and then the non-facing portion 12a that does not face the positive electrode 11 is formed in the negative electrode 12. In the non-facing portion 12a, a coated area 12a-2 and an uncoated area 12a-1 of the negative electrode mixture layer 12-2 are provided. Specifically, in the region of the non-facing portion 12a of the negative electrode 12 on the winding inner side (inner circumferential side), there are both the uncoated area 12a-1 where a negative electrode core material 12-1 is exposed and the coated area 12a-2 where the negative electrode mixture layer 12-2 is present.

In the example shown in FIG. 4, the coated area 12a-2 coated with the negative electrode mixture layer 12-2 extends toward the inner circumferential side in the upper portion of the negative electrode 12, though in the lower portion, the coated area 12a-2 is terminated on a near side. As a result, a trapezoidal uncoated area 12a-1 is formed. The trapezoidal uncoated portion is welded to a negative electrode tab 12-3.

Note that the trapezoidal uncoated portion may be cut off and only the coated area may be formed. In that case, the negative electrode tab 12-3 is welded to a winding outer side.

Here, the length of the non-facing portion 12a of the negative electrode 12 (= the longest coating length in the upper portion (first end portion) of the coated area 12a-2) is defined as L1, and the minimum coating length in the lower portion (second end portion) is defined as L2.

Note that the length of a portion obtained by subtracting the minimum coating length from the maximum coating length may be set to greater than or equal to 0.25 turns and less than or equal to 1.25 turns. As a result, it becomes possible to set the inclination of the terminal end of the coated area 12a-2 to be a prescribed inclination, so that the stress can be controlled.

As the positive electrode core material exposed portions 11a are shorter, the uneven stress described above is less likely to occur, though the operation of connecting the positive electrode tabs 19 having a sufficient width becomes difficult. In the present embodiment, the stress can be controlled by the shape of the negative electrode mixture layer in the non-facing portion 12a of the negative electrode 12, which makes it possible to secure the longitudinal length of the positive electrode core material exposed portions 11a to be greater than or equal to 20 mm.

### [Another Embodiment]

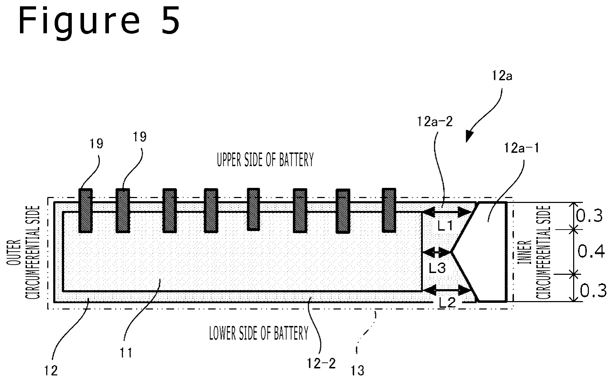

FIG. 5 is a view showing the configuration of another embodiment. In this example, in the non-facing portion 12a of the negative electrode 12, the negative electrode mixture layer 12-2 is longer in the upper portion and lower portion, and is shorter in an intermediate portion in the width direction. In addition, the negative electrode mixture layer 12-2 does not reach the start end of the negative electrode 12 at the upper end and the lower end, so that the uncoated area 12a-1 is present. Therefore, the uncoated area 12a-1, where the negative electrode core material 12-1 is exposed, has a shape made of a triangle and a rectangular, the triangle being formed such that the intermediate portion projecting toward the side away from the start end, the rectangular being formed from the entire width of the negative electrode 12. For example, a minimum coating length L3 of the coated area 12a-2 in the negative electrode mixture layer 12-2 in the non-facing portion 12a may be present at a position corresponding to greater than or equal to 0.3 and less than or equal to 0.7 when the length of the negative electrode in the width direction is defined as 1. As a result, it becomes possible to set the inclination at the terminal end of the coated area 12a-2 to be a prescribed inclination. In addition, the length of the coated area 12a-2 in a portion corresponding to the minimum coated length may be greater than or equal to 0.75 turns that is the number of turns at the time of winding. As a result, the portion where the negative electrode mixture layer 12-2 is present in the non-facing portion 12a of the negative electrode can be set to have a length that is greater than or equal to a predetermined length, so that the occurrence of failure in the battery reaction as described above can be suppressed.

Moreover, in this example, the longitudinal length of the uncoated area 12a-1 is wound greater than or equal to 0.5 turns. Thus, the stress at the time of winding can be adjusted by providing a prescribed amount of the portion where the negative electrode mixture layer 12-2 is nonexistent in the inner circumferential end portion of the negative electrode 12.

Thus, even in the case where the terminal end of the negative electrode mixture layer 12-2 is not linear but is in a bent shape, such a shape can control the stress applied to each electrode plate of the electrode assembly at the time of winding, so that generation of a gap and buckling can be prevented.

### [Experiments]

Table 1 shows occurrence statuses of floating of the electrode plates and buckling in the experiments where the length L1 of the non-facing portion 12a of the negative electrode 12 (= maximum coating length of the coated area 12a-2), the minimum coating length L2 of the coated area 12a-2, a coating ratio L1/L2, L1 - L2, and the number of positive electrode tabs (= the number of the positive electrode core material exposed portions 11a) were varied.

**[Table 1]**

| | NON-FACING PORTION L1 | NON-FACING PORTION MINIMUM COATING LENGTH L3 | L1/L2 | THE NUMBER OF TURNS OF L1-L2 | THE NUMBER OF POSITIVE ELECTRODE TABS | FLOATING OF ELECTRODE PLATES | BUCKLING |
|---|---|---|---|---|---|---|---|
| EXAMPLE ① | 0.75 TURNS | - | 1.33 | 0.25 TURNS | 8 | FAIR | GOOD |
| EXAMPLE ② | 0.75 TURNS | - | 1.67 | 0.5 TURNS | 8 | GOOD | GOOD |
| EXAMPLE ③ | 0.75 TURNS | - | 2 | 0.75 TURNS | 8 | GOOD | GOOD |
| EXAMPLE ④ | 0.75 TURNS | - | 2.33 | 1 TURNS | 8 | GOOD | GOOD |
| EXAMPLE ⑤ | 0.75 TURNS | - | 2.67 | 1.25TURNS | 8 | GOOD | FAIR |
| EXAMPLE ⑥ | 0.75 TURNS | - | 1.33 | 0.25 TURNS | 3 | FAIR TO GOOD | GOOD |
| EXAMPLE ⑦ | 0.75 TURNS | - | 1.33 | 0.25 TURNS | 1 | GOOD | GOOD |
| EXAMPLE ⑧ | 1 TURNS | 0.75 TURNS | 1.25 | 0.25 TURNS | 8 | GOOD | GOOD |
| COMPARATIVE EXAMPLE (1) | 0.75 TURNS | - | 1 | - | 8 | POOR | GOOD |
| COMPARATIVE EXAMPLE ② | 0.75 TURNS | - | 1 | - | 3 | FAIR | GOOD |
| COMPARATIVE EXAMPLE ③ | 0.75 TURNS | - | 1 | - | 1 | FAIR TO GOOD | GOOD |
| COMPARATIVE EXAMPLE ④ | 1.25 TURNS | - | 1 | - | 8 | GOOD | POOR |
| COMPARATIVE EXAMPLE ⑤ | 1.25 TURNS | - | 1 | - | 3 | GOOD | POOR |
| COMPARATIVE EXAMPLE ⑥ | 1.25 TURNS | - | 1 | - | 1 | GOOD | POOR |
| COMPARATIVE EXAMPLE ⑦ | 1 TURNS | - | 1 | - | 8 | FAIR | FAIR |
| COMPARATIVE EXAMPLE⑧ | 0.75 TURNS | - | 3 | 1.5TURNS | 8 | GOOD | POOR |

According to the results of the experiments, when the coating length ratio L1/L2 is less than 1.33, floating of the electrode plate occurs, and when the coating length ratio L1/L2 is greater than 2.67, buckling occurs. Therefore, it was found that the coating length ratio L1/L2 is preferably in the range greater than or equal to 1.33 and less than or equal to 2.67.

### [Effects of Embodiments]

With the positive electrode tabs 19 provided on one side as in the present embodiment, there is a difference in thickness between the upper side and the lower side of the electrode assembly 10 due to the presence of the positive electrode core material exposed portions 11a to be connected to the positive electrode tabs 19. The greater the number of the positive electrode tabs 19, the greater the difference.

In the present embodiment, the stress applied between the upper side and lower side of a winding assembly can be equalized by providing variations, such as inclination, to the length of the negative electrode mixture non-facing portion in the inner circumferential portion of the winding assembly between the upper and lower side of the electrode assembly 10 in the width direction.

### REFERENCE SIGNS LIST

10 Electrode assembly, 11 Positive electrode, 11-1 Positive electrode core material, 11-2 Positive electrode mixture layer, 11a Positive electrode core material exposed portion, 12 negative electrode, 19 Positive electrode tab, 20 Outer can, 26 Current collector plate.

## Claims

1. A secondary battery, comprising an electrode assembly formed by winding a positive electrode and a negative electrode in a spiral shape with a separator interposed, wherein
the positive electrode has a positive electrode tab that protrudes in one direction from the electrode assembly,
the negative electrode includes, on a winding inner side, a non-facing portion that does not face the positive electrode with the separator interposed, and
the non-facing portion has a negative electrode mixture layer in which a portion with a minimum coating length and a portion with a maximum coating length are formed, the minimum coating length and the maximum coating length being different in longitudinal coating length.

2. The secondary battery according to claim 1, wherein
a ratio of the maximum coating length to the minimum coating length in the coating length is greater than or equal to 1.33 and less than or equal to 2.67, and
when a length of the positive electrode in a width direction is defined as 1, the positive electrode tab is connected in a range within 0.3 from a first end portion where the positive electrode tab protrudes.

3. The secondary battery according to claim 2, wherein a length obtained by subtracting the minimum coating length from the maximum coating length is greater than or equal to 0.25 turns and less than or equal to 1.25 turns.

4. The secondary battery according to claim 2 or 3, wherein
when a length of the negative electrode in a width direction is defined as 1, the minimum coating length is present at a position corresponding to greater than or equal to 0.3 and less than or equal to 0.7,
a portion corresponding to the minimum coating length is wound for greater than or equal to 0.75 turns, and
the maximum coating length is positioned on the first end portion, while the minimum coating length is positioned on a second end portion corresponding to an opposite side of the first end portion in the width direction.

5. The secondary battery according to claim 2 or 3, wherein the coating length on the first end portion is the maximum coating length, and the coating length on a second end portion facing the first end portion is the minimum coating length.

6. The secondary battery according to claim 2 or 3, wherein the positive electrode has a positive electrode core material exposed portion where a positive electrode core material is exposed without formation of a positive electrode mixture layer, and the positive electrode core material exposed portion is in contact with only the first end portion.

7. The secondary battery according to claim 2 or 3, wherein the positive electrode has greater than or equal to two positive electrode core material exposed portions.

8. The secondary battery according to claim 2 or 3, wherein a length of the positive electrode core material exposed portion in a longitudinal direction of the positive electrode is greater than or equal to 20 mm.

9. The secondary battery according to claim 2 or 3, wherein
the non-facing portion has an uncoated area on an inner circumferential side of an end portion of the negative electrode mixture layer, and
a portion corresponding to a minimum uncoated area in the non-facing portion is wound greater than or equal to 0.5 turns.
